# EUROPEAN PATENT SPECIFICATION

(11) **EP 3 048 026 B1**
(45) Date of publication and mention of the grant of the patent: **11.03.2020**
(21) Application number: 15152086.3
(22) Date of filing: 22.01.2015
(51) Int. Cl.: B60W 50/00, B60R 16/037, B60W 40/08

(54) **METHOD AND SYSTEM FOR ASSISTING A VEHICLE OCCUPANT IN TAILORING VEHICLE SETTINGS**
VERFAHREN UND SYSTEM ZUR UNTERSTÜTZUNG EINES FAHRZEUGINSASSEN BEI DER ANPASSUNG DER FAHRZEUGEINSTELLUNGEN
PROCÉDÉ ET SYSTÈME POUR AIDER UN OCCUPANT DU VÉHICULE POUR ADAPTER DES PARAMÈTRES DE VÉHICULE

(43) Date of publication of application: 27.07.2016
(73) Proprietor: Volvo Car Corporation, 40531 Göteborg (SE)
(72) Inventor: Moric, Azra, 41129 Göteborg (SE); Oskarsson, Isabell, 41478 Göteborg (SE)
(74) Representative: Valea AB

(56) References cited:
- WO-A1-2013/101054
- WO-A1-2013/110706
- FR-A1- 2 861 349
- US-A1- 2013 030 645

## Description

### TECHNICAL FIELD

The present disclosure relates to a vehicle settings adapting system and a method performed therein for assisting an occupant of a vehicle in tailoring vehicle settings of the vehicle to suit the vehicle occupant.

### BACKGROUND

An increasing amount of features are finding their way into vehicles. It is not uncommon nowadays that vehicles, such as cars, have several hundreds of features ranging from basic items such as seat adjustment, display skin color adjustment and temperature control, to high-tech features such as e.g. automatic parallel parking and/or driver pattern recognition systems. This increase in the number of features of the vehicle, however, comes at a cost. The more features the vehicle is provided with and the more advanced the features become, the lengthier and more complex becomes the configuration process of the vehicle settings. Typically, a driver needs to turn to the owner's guide to understand the various parameters and attributes, and to learn how to configure them. This process requires considerable time, and far from every driver is interested in spending that time. Accordingly, this ever-increasing complexity of vehicle configuration has led to a need for managing personalized vehicle configurations in an easy and efficient manner.

WO2013/110706 A1 relates to classifying a driver based on longitudinal acceleration.

GB2496476, for instance, relates to managing personal settings on a vehicle. A vehicle's configuration is managed by receiving vehicle identification data for the vehicle, obtaining configuration data, which may comprise a configuration template, corresponding to the identification data, adjusting one or more parameters of the configuration data, transferring the adjusted configuration data to a control module of the vehicle, and using the control module to configure the vehicle in accordance with the configuration data. However, although GB2496476 enables efficient management of the configuration of a vehicle, the overwhelming task of tailoring vehicle settings remains a challenge to the driver.

### SUMMARY OF THE INVENTION

It is therefore an object of embodiments herein to provide an approach for facilitating configuration of vehicle settings for the vehicle occupant.

According to a first aspect of embodiments herein, the object is achieved by a method performed by a vehicle settings adapting system for assisting an occupant of a vehicle in tailoring vehicle settings of vehicle to suit vehicle occupant. The vehicle settings adapting system derives input parameters characterizing the vehicle occupant, said input parameters comprising data indicative of lifestyle characteristics of said vehicle occupant. The vehicle settings adapting system furthermore classifies the vehicle occupant into one matching profile representing a personality type considered to correspond to said vehicle occupant, selected from a plurality of predefined potential vehicle occupant profiles, based on said input parameters. Moreover, the vehicle setting adapting system determines vehicle settings specifically associated with said matching profile.

Thereby, an approach is provided which enables facilitated configuration of personalized vehicle settings for the vehicle occupant. That is, since the vehicle settings adapting system derives input parameters characterizing the vehicle occupant, input data is derived comprising attributes, information and/or content specific to the vehicle occupant. Moreover, since the vehicle settings adapting system furthermore classifies the vehicle occupant into one matching profile selected from a plurality of predefined potential vehicle occupant profiles, based on the input parameters, the vehicle occupant is, as the input parameters characterizing the vehicle occupant are taken into consideration, categorized into a predefined specific profile representing a personality type considered to most closely correspond to the vehicle occupant. Furthermore, since the vehicle settings adapting system determines vehicle settings specifically associated with the matching profile, vehicle settings which are considered to be representative for the matching profile, and subsequently considered suitable for the vehicle occupant, may be derived. Thereby, vehicle settings tailored for the vehicle occupant may be determined based merely on input parameters characterizing the vehicle occupant, and subsequently by selection of a matching profile, without the vehicle occupant himself or herself having to specify and/or personalize the vehicle settings. Accordingly, an approach is provided which enables personalized vehicle settings to a vehicle without the vehicle occupant having to read the user's guide, and/or without him or her needing to know about, or be interested in, the vast variety of vehicle settings available. That is, the introduced approach enables the vehicle settings adapting system to establish personality characteristics of the vehicle occupant, to thereby provide personalized and/or relevant vehicle settings.

For that reason, an approach is provided for facilitating configuration of vehicle settings for the vehicle occupant.

The technical features and corresponding advantages of the above mentioned method will be discussed in further detail in the following.

By introducing a method performed by a vehicle settings adapting system for assisting an occupant of a vehicle in tailoring vehicle settings of the vehicle to suit the occupant, an approach is provided which enables facilitated configuration of personalized vehicle settings for each vehicle occupant. The word "vehicle" may refer to any arbitrary vehicle, for instance an engine-propelled vehicle such as car, truck, lorry, van, bus, motor cycle, scooter, tractor, golf cart, military vehicle, vessel, boat etc., a rail-bound vehicle, such as e.g. a train or tram, or a bicycle. Furthermore, the vehicle may moreover be an autonomous vehicle adapted for autonomous driving, i.e. a vehicle which, at least to some extent, may be driven without human interaction. Furthermore, the expression "occupant of a vehicle" may refer to any arbitrary occupant of the vehicle, such as a driver thereof. The expression "vehicle settings" may refer to arbitrary configurable settings of the vehicle adapting features of the vehicle, and may range from a single setting to any arbitrary number of settings. "Vehicle settings" may, for instance, likewise refer to "vehicle configurations", "vehicle parameters", and/or "vehicle configuration parameters". Furthermore, "assisting" an occupant may refer to "enabling" and/or "supporting" an occupant, whereas "tailoring" vehicle settings may refer to "adapting", "adjusting", "modifying", "targeting" and/or "selecting" vehicle settings. Moreover, "suit" the occupant, which may be interpreted as "be assumed to suit" the occupant, may refer to "match", "be in line with" and/or "fit" the occupant. It should be noted that the embodiments disclosed herein may be arranged to provide personalized vehicle settings for each of a plurality of vehicle occupants, and not necessarily to provide the same vehicle settings for all of the occupants of a vehicle. However, one or more vehicle settings may be arranged to apply to the whole vehicle, whereas one or more other vehicle settings may be arranged to apply only to the environment of a particular vehicle occupant.

Moreover, the vehicle may be adapted to have online abilities, for instance by supporting Wifi functionality, or by being adapted to be in radio communication with a radio communications network, such as a cellular communications network, e.g. LTE, EDGE, CDMA, 4G, 3G, GPRS, or GSM, e.g. via an infotainment system of the vehicle, and/or via an optional mobile device on-board the vehicle. The optional "mobile device" may, for instance, refer to a multi-functional smart phone, mobile phone, mobile terminal or wireless terminal, portable computer such as a laptop, PDA or tablet computer, surf plate such as an iPad, Pocket PC, and/or mobile navigation device. Moreover, the optional mobile device may be adapted to communicate with the vehicle, for instance with the infotainment system thereof, such that information and/or data may be transferred between the vehicle and the mobile device. Such communication may for instance be accomplished physically, such as via USB connection, and/or wirelessly, such as via Bluetooth, WiFi, or the like; additionally or alternatively, the connection may be accomplished via an intermediate system, such as a cloud, adapted to communicate with vehicles, for instance a management and/or assisting system such as e.g. commonly known Volvo On Call and/or "Ericsson Connected Vehicle Cloud". The vehicle may hence be referred to as a connected vehicle, supporting communication and/or data transfer to and from the vehicle.

The vehicle settings adapting system may, for instance, be at least partly comprised in the vehicle, for instance in one or more control units (CPUs) and/or nodes thereof. According to another example, the vehicle settings adapting system may be distributed, such that at least a portion of the vehicle settings adapting system may be arranged e.g. remotely from the vehicle, for instance in the optional mobile device discussed above, and/or in one or more databases, computers and/or servers, which may have online abilities, further may be adapted to communicate with the vehicle, and/or which for instance may support cloud functionality discussed above. Additionally or alternatively, the vehicle settings adapting system may, at least partly, be comprised in an input device, by means of which a vehicle occupant may provide input to the vehicle settings adapting system. Said input device may be comprised in the vehicle, and for instance be represented by, and/or comprised in, the infotainment system thereof; additionally or alternatively, the input device may be represented by, and/or comprised in, the optional mobile device discussed above. Furthermore, additionally or alternatively, the input device may be represented by, and/or comprised in, an arbitrary computer, which may have online abilities, further may be adapted to communicate with the vehicle, and/or which for instance may support cloud functionality discussed above. The method steps to be described in the following may for instance be provided at least partly by means of one or more application programs, such as one or more apps, running on the optional input device.

Since the vehicle settings adapting system derives input parameters characterizing a vehicle occupant, input data is derived comprising attributes, information and/or content specific to the vehicle occupant. Subsequently, by e.g. receiving input parameters comprising attributes associated with the vehicle occupant, the vehicle settings adapting system may establish attributes characteristic to the vehicle occupant. The input parameters may, for instance, comprise data indicative of de facto characteristics of the vehicle occupant, such as age or age span, gender, marital status, nationality, and/or income etc. Moreover, the input parameters may comprise data indicative of personality characteristics of the vehicle occupant, e.g. lifestyle characteristics of the vehicle occupant. The input parameters may accordingly indicate one or more preferred options of the vehicle occupant, such as his or her preferences to, opinion of, position on and/or view of any arbitrary one or more topics. Moreover, the input parameters may be indicative of interests of the vehicle occupant, and/or what the vehicle occupant prefers with regards to entertainment such as music, movies, books, games, radio channels or any other arbitrary type of media. Additionally or alternatively, the input parameters may be indicative of habits of the vehicle occupant, e.g. electronically traceable habits, such as web sites and/or blogs etc. e.g. relatively frequently visited and/or e.g. type of products purchased by the vehicle occupant on the Internet. One or more input parameters characterizing a vehicle occupant may be obtained from data concerning a manual setting of a vehicle parameter previously carried out by that vehicle occupant.

The input parameters may be provided to the vehicle settings adapting system in any arbitrary manner known in the art, whereby, correspondingly, the vehicle setting adapting system may derive the input parameters in any arbitrary manner known in the art. According to one example, the vehicle occupant, or one associated with the vehicle occupant, may provide input via a user interface of the input device discussed above. Subsequently, the vehicle settings adapting system may derive the input parameters by fetching the input provided via the input device. The input parameters may, for instance, be provided digitally and/or electronically, whereby the input parameters may be derived from input provided via e.g. one or more touch displays; additionally or alternatively the input parameters may be provided audibly, whereby the input parameters may be derived from input provided via e.g. one or more microphones. Additionally or alternatively, the vehicle settings adapting system may derive the input parameters by tracking and/or tracing data associated with the vehicle occupant, for instance traceable activities of the vehicle occupant on the Internet.

"Input parameters" may refer to "input data" and/or "input attributes". "Characterizing" may refer to "comprising attributes indicative of personality characteristics of", "comprising attributes specific to", "comprising attributes associated with", "comprising attributes indicative of", and/or "specified by". Furthermore, "deriving" may refer to "fetching", "reading", "requesting", "receiving", and/or "determining".

Since the vehicle settings adapting system furthermore classifies the vehicle occupant into one matching profile selected from a plurality of predefined potential vehicle occupant profiles, based on the input parameters, the vehicle occupant is, as the input parameters characterizing the vehicle occupant are taken into consideration, categorized into a predefined specific profile representing a personality type considered to correspond to the vehicle occupant. That is, by considering input parameters, e.g. by comparing the input parameters to respective predefined profile parameters of respective predefined potential vehicle occupant profiles, the vehicle settings adapting system may select the profile among the predefined profiles which constitute the best match, e.g. essentially matches and/or completely matches. According to an example, the expression "based on the input parameters" may comprise "based on comparing the input parameters to predefined profile parameters of the plurality of predefined potential vehicle occupant profiles". Notably, each and every one of the input parameters need not necessarily match corresponding predefined profile parameters in order to identify a matching profile.

The predefined potential vehicle occupant profiles, which e.g. may be stored in one or more memories of the vehicle settings adapting system, may be defined in any arbitrary manner, and/or into any arbitrary profile types, considered suitable. A predefined potential vehicle occupant profile may, for instance, be represented by "Practical", "Tech savvy", "Social", "Adventurous", and/or "Family-oriented" etc. The respective predefined potential vehicle occupant profiles may, for instance, respectively be defined based on differentiating profile parameters, such as profile parameters being associated with varying de facto characteristics of a potential vehicle occupant, such as age or age span, gender, marital status, nationality, and/or income etc. Said profile parameters may moreover be associated with varying data indicative of personality characteristics of a potential vehicle occupant, e.g. lifestyle characteristics of the potential vehicle occupant. The profile parameters may accordingly be associated with varying possible options associated with one or more arbitrary topics, whereby said options may represent varying potential preferred options of a potential vehicle occupant, such as his or her preferences to, opinion of, position on and/or or view of said topic(s). Moreover, the profile parameters may be associated with varying possible options of interests and/or entertainment of a potential vehicle occupant, whereby said options may represent what a potential vehicle occupant may prefer with regards to interests and/or entertainment such as music, movies, books, games, radio channels or any other arbitrary type of media. Additionally or alternatively, the profile parameters may be associated with varying possible options associated with habits, e.g. electronically traceable habits, of a potential vehicle occupant, whereby said options may represent e.g. varying potential web sites, blogs and/or products on web sites.

The expression "classifying the vehicle occupant into" one matching profile may refer to "matching the vehicle occupant with" and/or "selecting for the vehicle occupant" one matching profile. Moreover, the expression "matching profile" may refer to "profile considered matching", "suitable profile" and/or "selected match". "Predefined" potential vehicle occupant profiles may refer to "pre-set", "pre-stored" and/or "predetermined" potential vehicle occupant profiles, whereas "potential" vehicle occupant profiles may refer to "probable", "fictive" and/or "likely" vehicle occupant profiles. Moreover, "predefined potential vehicle occupant profiles" may refer to "predefined varying potential vehicle occupant profiles, whereas the expression "based on" the input parameters may refer to "taking into account", "considering" and/or "taking into consideration" the input parameters.

Moreover, since the vehicle settings adapting system determines vehicle settings specifically associated with the matching profile, vehicle settings which are considered to be representative for the matching profile, and subsequently considered suitable for the vehicle occupant, may be derived. Thereby, vehicle settings tailored for the vehicle occupant may be determined based merely on input parameters characterizing the vehicle occupant, and subsequently by selection of a matching profile, without the vehicle occupant himself or herself having to specify and/or personalize the vehicle settings. Accordingly, personalized vehicle settings may be established without the vehicle occupant having to read the user's guide, and/or without him or her needing to know about, or be interested in, the vast variety of available vehicle settings.

Vehicle settings specifically associated with the matching profile may be of arbitrary type or types. Moreover, the number of vehicle settings specifically associated with the matching profile may be of any arbitrary figure, for instance ranging from a single vehicle setting up to several hundreds. Specifically associated vehicle settings of one predefined potential vehicle occupant profile may comprise a subset, overlap and/or involve specifically associated vehicle settings of another predefined potential vehicle occupant profile. Correspondingly, some values of specifically associated vehicle settings of one predefined potential vehicle occupant profile may coincide with some values of specifically associated vehicle settings of another predefined potential vehicle occupant profile.

"Determining" vehicle settings may refer to "defining", "deriving", "retrieving", "fetching" and/or "receiving" vehicle settings. Moreover, determining "vehicle settings" may refer to determining "values of vehicle settings". The expression "specifically associated with" may refer to "suitable for" "considered suitable for", "derived from", "linked with", "attributed to" and/or "mapped with".

According to an embodiment, the vehicle settings adapting system may further implement the vehicle settings specifically associated with the matching profile. Thereby, the vehicle settings which are considered to be representative for the matching profile, and subsequently considered suitable for the vehicle occupant, may be applied in, on and/or to the vehicle. Thereby, the vehicle settings tailored for the vehicle occupant may be activated in, on and/or to the vehicle based merely on the input parameters characterizing the vehicle occupant, and subsequently by selection of a matching profile, without the vehicle occupant himself or herself having to specify and subsequently having to activate the tailored vehicle settings. Accordingly, personalized vehicle settings may be implemented without the vehicle occupant having to read the user's guide, and/or without him or her needing to know about, or be interested in, the vast variety of available vehicle settings.

Consequently, a vehicle occupant classified into a first matching profile may experience, face and/or be subjected to a first set of vehicle settings in the vehicle, whereas another vehicle occupant classified into a second matching profile may experience, face and/or be subjected to a second set of vehicle settings in the vehicle, which second set of vehicle settings deviates from the first set of vehicle settings. Accordingly, for example, a vehicle occupant classified into a matching profile defined as e.g. "Tech savvy", may be presented with more technical information and/or options in the vehicle than a vehicle occupant classified into another matching profile. "Implementing" the vehicle settings may refer to "activating", "applying" and/or "transferring to the vehicle" the vehicle settings.

Optionally, prior to, or at any stage after implementing the vehicle settings specifically associated with the matching profile, the vehicle occupant may be prompted and/or given the option to accept or decline one or more of said vehicle settings.

According to another embodiment, the vehicle settings adapting system may further define a plurality of potential vehicle occupant profiles, and associate a respective set of vehicle settings to each of the potential vehicle occupant profiles. Thereby, by defining a plurality of varying potential vehicle occupant profiles, a number of fictive profiles are specified, into each of which a potential vehicle occupant subsequently may be classified. Moreover, by associating a respective set of vehicle settings to each of the potential vehicle occupant profiles, respective vehicle settings considered to be representative for respective profiles and subsequently considered suitable for respective potential vehicle occupants, are - e.g. prior to classifying of the vehicle driver - linked to respective profiles. Thereby, the potential vehicle occupant profiles may each be mapped with respective vehicle settings considered suitable for respective profile, e.g. prior to classifying of the vehicle driver. According to an example, the expression "defining a plurality of potential vehicle occupant profiles" may comprise "defining a plurality of potential vehicle occupant profiles, each respectively comprising a varying set of profile parameters".

Notably, the earlier discussed "predefined" potential vehicle occupant profiles may refer to the recently discussed defined plurality of potential vehicle occupant profiles. Moreover, notably, the earlier discussed "vehicle settings specifically associated with the matching profile", may refer to a recently discussed set of vehicle settings associated with one of the potential vehicle occupant profiles. Furthermore, notably, the earlier discussed "predefined" profile parameters may refer to the recently discussed defined profile parameters.

"Defining" a plurality of potential vehicle occupant profiles may refer to "specifying" and/or "determining" a plurality of potential vehicle occupant profiles, whereas "associating" a respective set of vehicle settings to each of the potential vehicle occupant profiles may refer to "mapping", "storing in association with", "linking" and/or "attributing" a respective set of vehicle settings to each of the potential vehicle occupant profiles.

According to yet another embodiment, the vehicle settings may comprise physical settings adapted to affect physical characteristics of the vehicle. Thereby, vehicle settings which may influence physical aspects of the vehicle may be tailored to suit the vehicle occupant. "Physical settings" may for instance relate to one or more of seat adjustment, steering wheel adjustment, and/or chassis elevation etc. Accordingly, as an example, a vehicle occupant classified into a matching profile defined as e.g. "Sporty" may hence experience a more laid back seat position than a vehicle occupant classified into another matching profile.

Additionally or alternatively, the vehicle settings may comprise digital settings adapted to affect digital characteristics of the vehicle. Thereby, vehicle settings which may influence digital aspects of the vehicle, such as one or more human-machine-interfaces, may be tailored to suit the vehicle occupant. Digital characteristics may, for instance, refer to type and/or amount of information displayed on any of arbitrary displays associated with the vehicle. Additionally or alternatively, digital characteristics may refer to in what manner information is displayed, for instance skin colour thereof etc. Accordingly, as an example, a vehicle occupant classified into a matching profile defined as e.g. "Tech savvy", may hence be presented with more technical information on the display(s) and/or options provided via the display(s) than a vehicle occupant classified into another matching profile. Moreover, the digital characteristics may refer to navigation settings, such as points of interest presented, and/or suggested navigation route. Accordingly, as an example, a vehicle occupant classified into a matching profile defined as e.g. "Adventurous", may hence be presented a more challenging navigation route than a vehicle occupant classified into another matching profile.

Additionally or alternatively, the vehicle settings may comprise sound settings adapted to affect sound characteristics of the vehicle. Thereby, vehicle settings which may influence sound aspects of the vehicle may be tailored to suit the vehicle occupant. "Sound settings" may for instance relate to one or more of media equalizer adjustment, indicator sound, and/or volume level etc. Accordingly, as an example, a vehicle occupant classified into a matching profile defined as e.g. "Family-oriented" may experience a more gentle indicator sound than a vehicle occupant classified into another matching profile.

Additionally or alternatively, the vehicle settings may comprise light settings adapted to affect light characteristics of the vehicle. Thereby, vehicle settings which may influence interior and/or exterior light aspects of the vehicle may be tailored to suit the vehicle occupant. "Light settings" may for instance relate to one or more of mood lights, and/or curve bending lights etc. Accordingly, as an example, a vehicle occupant classified into a matching profile defined as e.g. "Family-oriented" may hence experience a more soft mood light than a vehicle occupant classified into another matching profile.

According to still another embodiment, the vehicle settings adapting system may, by means of a user interaction application, derive input parameters characterizing the vehicle occupant by prompting the vehicle occupant to provide response to at least a first preference question, wherein the input parameters are based on the response. Thereby, by inviting the vehicle occupant, or one associated with the occupant, to provide feedback to one or more lifestyle revealing questions, and by the input parameters being based on the response, the input parameters may be derived, and subsequently tailored vehicle settings be determined, with the vehicle occupant merely having to consider one or more personality revealing question rather than personally having to consider tailoring of vehicle parameter settings.

The at least first preference question may be presented by means of interactive media of arbitrary kind, and for instance comprise words, texts, pictures, videos, and/or sounds etc. The at least first preference question may for instance be represented by two or more options presented e.g. simultaneously to the vehicle occupant, of which the vehicle occupant is prompted to make one or more selections and/or ratings. The two or more options may for instance be represented by two or more simultaneously presented statements, images, sounds and/or videos, to which the vehicle occupant is invited to take a stand by selection and/or rating of one or more of the options. The at least first preference question may be followed by an arbitrary number of lifestyle revealing questions, for instance organized in a multiple branching fashion. The response - here the one or more selections and/or ratings - may hence comprise, and/or constitute the input parameters. Accordingly, the one or more selections and/or ratings provided by the vehicle occupant to the one or more preference questions represent the response upon which the input parameters are based, and subsequently upon which the classification of the vehicle occupant into a matching profile and corresponding vehicle settings, are based.

"User interaction application" may refer to "user interaction application program" and/or "user interaction app", which for instance may run on the input device discussed above. "Prompting" may refer to "inviting", "suggesting" and/or "requesting", and moreover, "prompting" may refer to "electronically prompting" and/or "digitally prompting". Furthermore, "response" may refer to one or more responses, and moreover, "provide response" may refer to "provide response electronically" and/or "provide response digitally". "Preference" question may refer to "personality uncovering", "lifestyle revealing" and/or "personality characteristics revealing" question, whereas "question" may refer to "alternative", "option" and/or "statement". The expression of the input parameters "being "based on" the response, may refer to the input parameters "being derived from", "comprising", "taking into account" and/or "considering" the response. Notably, the response may constitute the input parameters. Moreover, according to an alternative embodiment, the at least first preference question may be an open question.

According to an additional or alternative embodiment, the vehicle settings adapting system may derive the input parameters characterizing the vehicle occupant from a personal account associated with the vehicle occupant, wherein the input parameters are based on content of the personal account. Thereby, by the vehicle occupant allowing the vehicle settings adapting system at least partial access to a personal account associated with the vehicle occupant, and by the input parameters being based on content of the personal account, the input parameters may be derived, and subsequently tailored vehicle settings be determined, with the vehicle occupant merely having to allow the vehicle parameters adapting system to read data, such as vehicle occupant characterizing data, from said account rather than the vehicle occupant personally having to consider tailoring of vehicle parameter settings. That is, by deriving selected input parameters from said account, which input parameters are specific to and/or associated with the vehicle occupant - thus e.g. indicating personality characteristics of the vehicle occupant - classification of the vehicle occupant into a matching profile and subsequently determination of corresponding vehicle settings, is enabled.

The personal account may be represented by any arbitrary account associated with the vehicle occupant comprising characteristic data of the vehicle occupant. The personal account may hence for instance be represented by a personal vehicle account associated with the vehicle occupant, i.e. an account further associated with the vehicle associated with the vehicle occupant. Additionally or alternatively, the personal account may be represented by a social media account and/or an entertainment account. The social media account may for instance be represented by one or more of "Facebook", "Twitter", and/or "Instagram" etc, an equivalent thereof, and/or a successor thereof. The entertainment account may for instance be represented by "Spotify, "Pandora", "Echo Nest", "rdio", and/or "WiMP" etc., an equivalent thereof, and/or a successor thereof. The input parameters may for instance be derived by reading or receiving selected and/or suitable input data - which may indicate personality characteristics of the vehicle occupant - over e.g. the Internet, from the personal account associated with the vehicle occupant. As an example, one or more input parameters indicating the vehicle occupant favouring and/or frequently listening to and/or downloading music directed to children, e.g. via said entertainment account, may enable the vehicle parameter adapting system to classify the vehicle occupant into a matching profile representing a "Family-oriented" profile.

The content of said account(s) may for instance relate to data indicative of de facto characteristics of the vehicle occupant, such as age or age span, gender, marital status, nationality, and/or income etc. Moreover, the content of said account(s) may for instance relate to data indicative of personality characteristics of the vehicle occupant, e.g. lifestyle characteristics of the vehicle occupant. The content of said account(s) may accordingly indicate one or more preferred options of the vehicle occupant, such as his or her preferences to, opinion of, position on and/or view of any arbitrary one or more topics. Moreover, the content of said account(s) may be indicative of interests of the vehicle occupant, and/or what the vehicle occupant prefers with regards to entertainment such as music, movies, books, games, radio channels or any other arbitrary type of media. Additionally or alternatively, the content of said account(s) may be indicative of habits of the vehicle occupant, for instance electronically traceable habits, such as web sites and/or blogs etc. e.g. relatively frequently visited and/or e.g. type of products purchased by the vehicle occupant on the Internet.

"Personal account" may refer to "personal digital account", whereas the expression "associated with" the vehicle occupant may refer to "owned by", "created by", "assigned to" and/or "administrated by" the vehicle occupant. Moreover, "content", which may be interpreted as "selected content", may refer to "input data", "data" and/or "information". Notably, the content may constitute the input parameters. Furthermore, the expression of the input parameters "being "based on" content, may refer to the input parameters "being derived from", "comprising", "taking into account" and/or "considering" content.

According to a second aspect of embodiments herein, the object is achieved by a vehicle settings adapting system adapted for assisting an occupant of a vehicle in tailoring vehicle settings of the vehicle to suit the occupant. The vehicle setting adapting system comprises a deriving unit adapted for deriving input parameters characterizing the vehicle occupant. The vehicle setting adapting system furthermore comprises a classifying unit adapted for classifying the vehicle occupant into one matching profile selected from a plurality of predefined potential vehicle occupant profiles, based on the input parameters. Moreover, the vehicle settings adapting system comprises a determining unit adapted for determining vehicle settings specifically associated with the matching profile.

According to an embodiment, the vehicle settings adapting system may further comprise an implementing unit adapted for implementing at least one of the vehicle settings specifically associated with the matching profile.

According to another embodiment, the vehicle settings adapting system may further comprise a defining unit adapted for defining a plurality of potential vehicle occupant profiles, and an associating unit adapted for associating a respective set of vehicle settings to each of the potential vehicle occupant profiles.

According to yet another embodiment, the vehicle settings may comprise physical settings adapted to affect physical characteristics of said vehicle.

Additionally or alternatively, the vehicle settings may comprise digital settings adapted to affect digital characteristics of the vehicle.

Additionally or alternatively, the vehicle settings may comprise sound settings adapted to affect sound characteristics of the vehicle.

Additionally or alternatively, the vehicle settings may comprise light settings adapted to affect light characteristics of the vehicle.

According to still another embodiment, the deriving unit may be adapted for deriving, by means of a user interaction application, the input parameters by prompting the vehicle occupant to provide response to at least a first preference question, wherein the input parameters are based on the response.

According to an additional or alternative embodiment, the deriving unit may be adapted for deriving the input parameters from a personal account associated with the vehicle occupant, wherein the input parameters are based on content of the personal account.

Similar advantages as those mentioned in the foregoing in relation to the first aspect correspondingly apply to the second aspect, why these advantages are not further discussed.

According to a third aspect of embodiments herein, the object is achieved by a vehicle comprising at least a portion of a vehicle settings adapting system discussed above. Once more, similar advantages as those mentioned in the foregoing in relation to the first aspect correspondingly apply to the third aspect, why these advantages are not further discussed.

According to a fourth aspect of embodiments herein, the object is achieved by an input device comprising at least a portion of a vehicle settings adapting system discussed above. The input device is adapted to enable a vehicle occupant, or one associated with the vehicle occupant, to provide input to the vehicle settings adapting system. Again, similar advantages as those mentioned in the foregoing in relation to the first aspect correspondingly apply to the fourth aspect, why these advantages are not further discussed.

According to a fifth aspect of embodiments herein, the object is achieved by a computer program product comprising a computer program containing computer program code means arranged to cause a computer or a processor to execute the steps of the vehicle settings adapting system discussed above, stored on a computer-readable medium or a carrier wave. Yet again, similar advantages as those mentioned in the foregoing in relation to the first aspect correspondingly apply to the fifth aspect, why these advantages are not further discussed.

It should be appreciated that the introduced methods in the vehicle settings adapting system may require the vehicle, the input device and/or the vehicle settings adapting system, to be in a respective "ON" state.

It should also be noted that, once selected, one or more selected vehicle settings may be arranged to change, for example depending on the time of day the vehicle is being used, the terrain over which the vehicle is being driven or the speed at which the vehicle is being driven etc.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic overview of an exemplifying vehicle settings adapting system according to embodiments of the disclosure;
**Figure 2** illustrates a schematic overview of an exemplifying implementation of a vehicle settings adapting system according to embodiments of the disclosure;
**Figure 3** is a schematic block diagram illustrating an exemplifying vehicle settings adapting system according to embodiments of the disclosure; and
**Figure 4** is a flowchart depicting an exemplifying method performed by a vehicle settings adapting system according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to assisting an occupant of a vehicle in tailoring vehicle settings of the vehicle to suit the vehicle occupant, there will be disclosed that the inventive concept enables personalized vehicle settings to a vehicle without the vehicle occupant having to read the vehicle user's guide, and/or without him or her needing to know about, or be interested in, the vast variety of vehicle settings available.

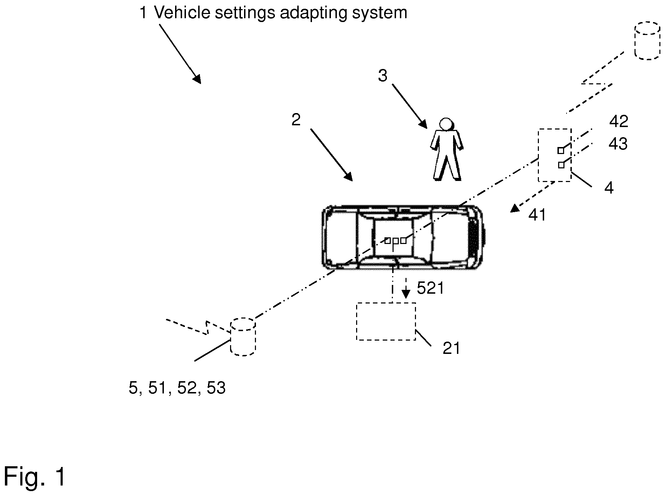

Referring now to the figures and **Figure 1** in particular, there is depicted a schematic overview of an exemplifying **vehicle settings adapting system 1** according to embodiments of the disclosure. The vehicle settings adapting system 1 is adapted for assisting a **vehicle occupant 3** of a **vehicle 2** in tailoring vehicle settings of the vehicle 2 to suit the vehicle occupant 3. The vehicle setting adapting system 1, which will be described in further detail later on in this description, may at least partly be comprised in the vehicle 2; here the vehicle 2 is represented by a passenger car. The vehicle 2 here further comprises at least a first arbitrary **display 21**, such as an infotainment system display, which may be affected by **vehicle settings 521** specifically associated with a matching profile, as will be described in greater detail further on in this description.

Furthermore, the vehicle settings adapting system 1 may at least partly be comprised in an optional **input device 4**, which input device 4 is adapted to enable the vehicle occupant (3), or one associated with the vehicle occupant 3, to provide input to the vehicle settings adapting system 1. From said input, **input parameters 41** may be derived. The input device 4 is here represented by an infotainment system of the vehicle 2 comprising a user interface via which the vehicle occupant 3 may interact with the vehicle settings adapting system 1. According to alternative embodiments, the input device 4 may be represented by e.g. a smartphone which may be adapted to communicate with the vehicle 2, and/or an arbitrary computer, which may have online abilities, further may be adapted to communicate with the vehicle, and/or which for instance may support cloud functionality.

The optional input device 4 here comprises an optional **user interaction application 42**, and an optional **personal account 43** associated with the vehicle occupant 3, both of which will be described in greater detail further on in this description. Content of the personal account 43 may be comprised in one or more databases, computers and/or servers, which may have online abilities, further may be adapted to communicate with the vehicle 2, and which for instance may support cloud functionality.

Further depicted is an exemplary at least first optional **storage 5** of predefined content, which may refer to one or more memories, clouds and/or databases storing predefined content associated with the vehicle settings adapting system 1. The storage 5 is in the shown embodiment comprised in the vehicle 2; however, according to alternative embodiments, at least a portion of the storage 5 may be arranged remotely from the vehicle 2, e.g. in the smart phone discussed above and/or or in one or more databases, computers and/or servers, which may have online abilities, further may be adapted to communicate with the vehicle 2, and which for instance may support cloud functionality. The storage 5 may comprise a plurality of predefined **potential vehicle occupant profiles 51**, a **respective set of vehicle settings 52** and/or optional **predefined profile parameters 53** of the plurality of potential vehicle occupant profiles 51, all of which will be described in further detail further on in this description.

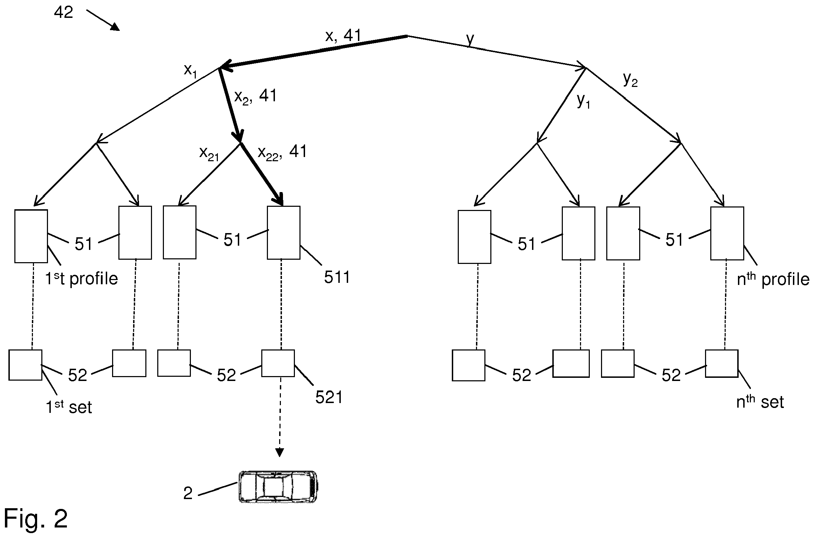

**Figure 2** illustrates a schematic overview of an exemplifying implementation of a vehicle settings adapting system 1 according to embodiments of the disclosure. The optional user interaction application 42 is adapted to enable the vehicle settings adapting system 1 to prompt the vehicle occupant 3 to provide response to at least a first preference question, which may be a lifestyle revealing question. Here, the vehicle occupant 3 is prompted with preference questions designed in a multiple branching fashion, where the content of a preference question following a previous preference question is dependent on the outcome of said previous preference question. Notably, according to alternative embodiments, a preference question following a previous preference question, need not necessarily be dependent on the outcome of said previous preference question. The number of preference question levels may be of any arbitrary figure; in the shown embodiment, for the sake of simplicity, the number of preference question levels is restricted to three.

The at least first preference question, which may represent a first level preference question, is here represented by two options - **option x** and **option y** - presented to the vehicle occupant 3, of which the vehicle occupant 3 is prompted to make a selection. Option x and option y may for instance be represented by two simultaneously presented statements, images, sounds and/or videos, to which the vehicle occupant 3 is invited to take a stand by selection of either option x or option y. A selection made by the vehicle occupant 3 is here represented by option x, which thus constitute a response to the at least first preference question.

The at least first preference question is in the shown embodiment followed by a second preference question, here represented by two options - **option x₁** and **option x₂** - where a selection made by the vehicle occupant 3 here is represented by option x₂, which thus constitute a response to the second preference question. The second preference question, which may represent a second level preference question, is here dependent on the outcome of the at least first question, i.e. a selection by the vehicle occupant 3 of option x rather than option y. Notably, should a selection by the vehicle occupant 3 have been option y rather than option x, then the second preference question would have been represented by option **option y₁** and **option y₂**.

The second preference question is in the shown embodiment followed by a third preference question, here represented by two options - **option x₂₁** and **option x₂₂** - where a selection made by the vehicle occupant 3 here is represented by option x₂₂, which thus constitute a response to the third preference question. The third preference question, which may represent a third level preference question, is here dependent on the outcome of the second question, i.e. a selection by the vehicle occupant 3 of option x₂ rather than option x₁.

Furthermore depicted in Figure 2 is n predefined potential vehicle occupant profiles 51, and n sets of corresponding vehicle settings 52, where reference 511 denotes a **matching profile 511** based on the input parameters 41, here namely the outcome x, x₂, x₂₂ of the three preference questions, and where reference 521 denotes the vehicle settings 521 specifically associate with the matching profile 511.

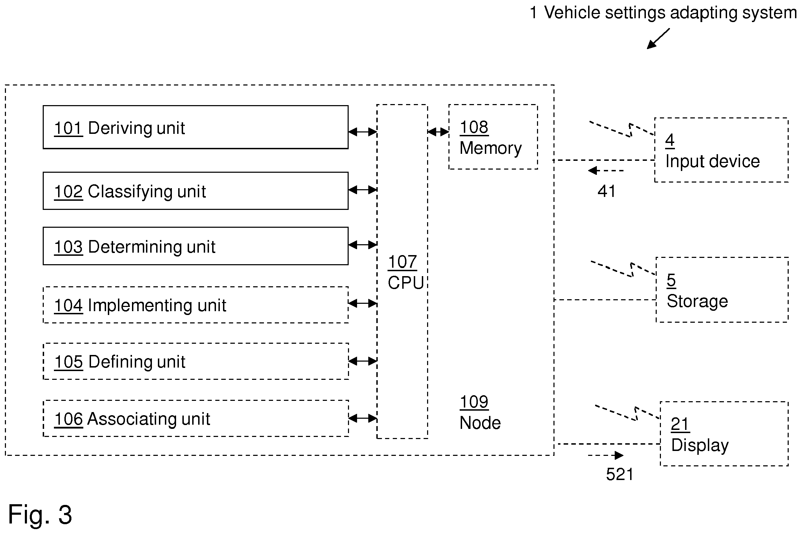

As further shown in **Figure 3**, which is a schematic block diagram illustrating an exemplifying vehicle settings adapting system 1 according to embodiments of the disclosure, the vehicle settings adapting system 1 is, as previously mentioned in conjunction with Figures 1 and 2, adapted for assisting an occupant 3 of a vehicle 2 in tailoring vehicle settings of the vehicle 2 to suit the vehicle occupant 3.

The vehicle settings adapting system 1 comprises a **deriving unit 101**, a **classifying unit 102**, and a **determining unit 103**, all of which will be described in further detail below. Moreover, the vehicle settings adapting system 1 may further comprise an optional **implementing unit 104**, an optional **defining unit 105**, and/or an optional **associating unit 106**, which in a similar manner will be described in further detail later on in this description.

Furthermore, the embodiments herein for assisting an occupant 3 of a vehicle 2 in tailoring vehicle settings of the vehicle 2 to suit the vehicle occupant 3, may be implemented through one or more processors, such as a **processor 107**, here denoted CPU, together with computer program code for performing the functions and actions of the embodiments herein. Said program code may also be provided as a computer program product, for instance in the form of a data carrier carrying computer program code for performing the embodiments herein when being loaded into the vehicle settings adapting system 1. One such carrier may be in the form of a CD ROM disc. It is however feasible with other data carriers such as a memory stick. The computer program code may furthermore be provided as pure program code on a server and downloaded to the vehicle settings adapting system 1.

The vehicle settings adapting system 1 may further comprise a **memory 108** comprising one or more memory units. The memory 108 may be arranged to be used to store e.g. information, and further to store data, configurations, schedulings, and applications, and for instance the plurality of potential vehicle occupant profiles 51, the respective set of vehicle settings 52 associated with each of the potential vehicle occupant profiles 51, the predefined profile parameters 53 of the plurality of potential vehicle occupant profiles 51, the at least first preference question, the response x, x₂, x₂₂ provided by the vehicle occupant 3, the input parameters 41, the matching profile 511, the vehicle settings 521 associated specifically with the matching profile 511, and/or the content derived from the personal account 43 associated with the vehicle occupant 3 etc., to perform the methods herein when being executed in the vehicle settings adapting system 1. The memory 108 may at least partly comprise the storage 5 of predefined content; vice versa, the storage 5 of predefined content may at least partly comprise the memory 108. According to an example, the memory 108 represents the storage 5 of predefined content.

Furthermore, the deriving unit 101, the classifying unit 102, the determining unit 103, the optional implementing unit 104, the optional defining unit 105, the optional associating unit 106, the optional processor 107 and/or the optional memory 108, may for instance be implemented in one or more of an arbitrary **node 109** arranged locally on-board the vehicle 2, or additionally or alternatively in one or more of an input device 4, user device, computer, database and/or server discussed above. A node 109 may be an electronic control unit (ECU) or any suitable generic electronic device, and may involve, for instance, an infotainment node or a main central node. According to an alternative example, the node(s) 109 may, as a complement to being represented by e.g. one or several integrated ECUs, be represented by a plug-in solution, for instance a dongle. In that manner, an aftermarket solution may be provided to any arbitrary vehicle suitable.

Those skilled in the art will also appreciate that the deriving unit 101, the classifying unit 102, the determining unit 103, the optional implementing unit 104, the optional defining unit 105, and/or the optional associating unit 106, may refer to a combination of analog and digital circuits, and/or one or more processors configured with software and/or firmware, e.g. stored in a memory such as the memory 108, that when executed by the one or more processors such as the processor 107 perform as will be described in more detail below. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

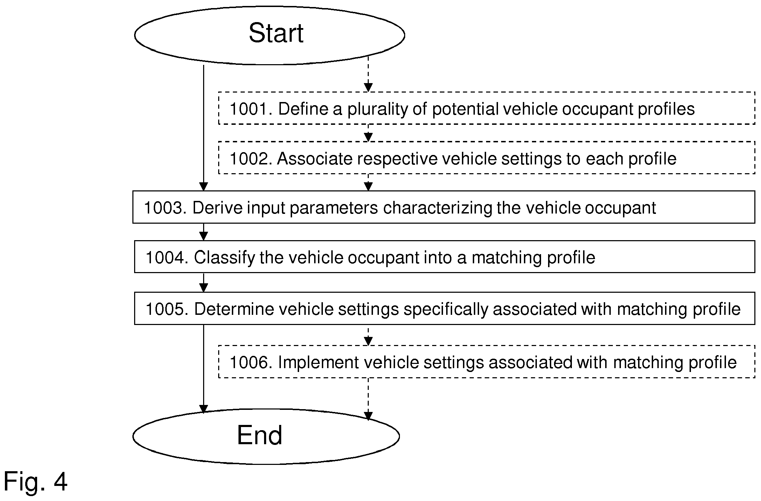

**Figure 4** is a flowchart depicting an exemplifying method performed by a vehicle settings adapting system 1 according to embodiments of the disclosure. The method in the vehicle settings adapting system 1 is, as previously indicated, for assisting an occupant 3 of a vehicle 2 in tailoring vehicle settings of the vehicle 2 to suit the vehicle occupant 3.

The exemplifying method, which e.g. may be intermittently repeated and/or repeated upon request by the vehicle settings updating system 1, the vehicle occupant 3 and/or one associated with the vehicle occupant 3, comprises the following actions discussed with support from Figures 1-3. The actions may be taken in any suitable order, and/or one or more actions may even be performed simultaneously where applicable.

### Action 1001

In optional Action 1001, the vehicle settings adapting system 1 may define, e.g. by means of the defining unit 105, a plurality of potential vehicle occupants profiles 51. Correspondingly, the defining unit 105 may be adapted for defining a plurality of potential vehicle occupant profiles 51.

Thereby, a number of fictive profiles 51 are specified.

According to an example, the e.g. defining unit 105 may define a plurality of potential vehicle occupant profiles 51, each respectively comprising a varying set of profile parameters 53. Correspondingly, the defining unit 105 may be adapted for defining a plurality of potential vehicle occupant profiles 51, each respectively comprising a varying set of profile parameters 53.

### Action 1002

In optional Action 1002, the vehicle settings adapting system 1 may associate, e.g. by means of the associating unit 106, a respective set of vehicle settings 52 to each of the potential vehicle occupant profiles 51. Correspondingly, the associating unit 106 may be adapted for associating a respective set of vehicle settings 52 to each of the potential vehicle occupant profiles 51.

Thereby, respective vehicle settings 52 considered to be representative for respective profiles 51 and subsequently considered suitable for respective potential vehicle occupants 3, are linked to respective profiles. Thereby, the potential vehicle occupant profiles 51 may each be mapped with respective vehicle settings 52 considered suitable for respective profile, as shown in Figure 2.

### Action 1003

In Action 1003, the vehicle settings adapting system 1 derives, e.g. by means of the deriving unit 101, input parameters 41 characterizing the vehicle occupant 3. Correspondingly, the deriving unit 101 is adapted for deriving input parameters 41 characterizing the vehicle occupant 3.

Thereby, input data is derived comprising attributes, information and/or content specific to the vehicle occupant 3.

Optionally, e.g. the deriving unit 101 may derive, by means of the user interaction application 42, the input parameters 41 by prompting the vehicle occupant 3 to provide response x, x₂, x₂₂ to at least the first preference question. Correspondingly, the deriving unit 101 may further be adapted for deriving, by means of the user interaction application 42, the input parameters 41 by prompting the vehicle occupant 3 to provide response x, x₂, x₂₂ to at least the first preference question. The input parameters 41 are based on the response x, x₂, x₂₂.

Thereby, the input parameters 41, x, x₂, x₂₂ may be derived, with the vehicle occupant 3 merely having to consider one or more personality revealing question rather than personally having to consider tailoring of vehicle parameter settings, as shown in Figure 2.

Additionally or alternatively, optionally, the deriving unit 101 may derive the input parameters 41 from the personal account 43 associated with the vehicle occupant 3. Correspondingly, the deriving unit 101 may further be adapted for deriving the input parameters 41 from the personal account 43 associated with the vehicle occupant 3. The input parameters 41 are based on content of the personal account 43.

Thereby, the input parameters 41 may be derived, with the vehicle occupant 3 merely having to allow the vehicle parameters adapting system 1 to read data, such as vehicle occupant characterizing data, from the personal account 43 rather than personally having to consider tailoring of vehicle parameter settings.

### Action 1004

In Action 1004, the vehicle settings adapting system 1 classifies, e.g. by means of the classifying unit 102, the vehicle occupant 3 into one matching profile 511 selected from the plurality of predefined potential vehicle occupant profiles 51, based on the input parameters 41. Correspondingly, the classifying unit 102 is adapted for classifying the vehicle occupant 3 into one matching profile 511 selected from the plurality of predefined potential vehicle occupant profiles 51, based on the input parameters 41.

Thereby, the vehicle occupant 3 is, as the input parameters 41 characterizing the vehicle occupant are taken into consideration, categorized into a predefined specific profile 511 representing a personality type considered to correspond to the vehicle occupant 3, as shown in Figure 2.

According to an example, the e.g. classifying unit 102 may classify the vehicle occupant 3 into one matching profile 511 selected from the plurality of predefined potential vehicle occupant profiles 51, based on comparing the input parameters 41 to the predefined profile parameters 53 of the plurality of predefined potential vehicle occupant profiles 51. Correspondingly, the classifying unit 102 may be adapted for classifying the vehicle occupant 3 into one matching profile 511 selected from the plurality of predefined potential vehicle occupant profiles 51, based on comparing the input parameters 41 to the predefined profile parameters 53 of the plurality of predefined potential vehicle occupant profiles 51.

### Action 1005

In Action 1005, the vehicle settings adapting system 1 determines, e.g. by means of the determining unit 103, vehicle settings 521 specifically associated with the matching profile 511. Correspondingly, the determining unit 103 is adapted for determining vehicle settings 521 specifically associated with the matching profile 511.

Thereby, vehicle settings 521 which are considered to be representative for the matching profile 511, and subsequently considered suitable for the vehicle occupant 3, may be derived, as shown in Figure 2. Accordingly, vehicle settings 521 tailored for the vehicle occupant 3 may be determined based merely on input parameters 41 characterizing the vehicle occupant 3, and subsequently by selection 1004 of a matching profile 511, without the vehicle occupant 3 himself or herself having to specify and/or personalize the vehicle settings 521.

Optionally, the vehicle settings 521 specifically associated with the matching profile 511 may comprise physical settings adapted to affect physical characteristics of the vehicle 2.

Additionally or alternatively, the vehicle settings 521 specifically associated with the matching profile 511 may optionally comprise digital settings adapted to affect digital characteristics of the vehicle 2. Thereby, vehicle settings 521 which may influence digital aspects of the vehicle 2, such as HMI, may be tailored to suit the vehicle occupant 3. Digital characteristics may, for instance, refer to type and/or amount of information displayed on the one or more displays 21 associated with the vehicle 2. Additionally or alternatively, digital characteristics may refer to in what manner information is displayed on the one or more displays 21, for instance skin colour etc.

Moreover, additionally or alternatively, the vehicle settings 521 specifically associated with the matching profile 511 may optionally comprise sound settings adapted to affect sound characteristics of the vehicle 2.

Furthermore, additionally or alternatively, the vehicle settings 521 specifically associated with the matching profile 511 may optionally comprise light settings adapted to affect light characteristics of the vehicle 2.

### Action 1006

In Action 1006, the vehicle settings adapting system 1 may implement, e.g. by means of the implementing unit 104, the vehicle settings 521 specifically associated with the matching profile 511. Correspondingly, the implementing unit 104 may be adapted for implementing the vehicle settings 521 specifically associated with the matching profile 511.

Thereby, the vehicle settings 521 which are considered to be representative for the matching profile 511, and subsequently considered suitable for the vehicle occupant 3, may be applied in, on and/or to the vehicle 2 as shown in Figure 2, for instance affecting the HMI of the exemplifying infotainment display 21 of Figure 1. Accordingly, the vehicle settings 521 tailored for the vehicle occupant 3 may be activated in, on and/or to the vehicle 2 based merely on the input parameters 41 characterizing the vehicle occupant 3, and subsequently by selection 1004 of a matching profile 511, without the vehicle occupant 3 himself or herself having to specify and subsequently having to activate the tailored vehicle settings 521.

Consequently, as shown in the foregoing, an approach has been introduced according to which there is enabled facilitated configuration of personalized vehicle settings 521 for the vehicle occupant 3. That is, an approach is provided which enables personalized vehicle settings 521 to a vehicle 2 without the vehicle occupant 3 having to read the vehicle user's guide, and/or without him or her needing to know about, or be interested in, the vast variety of vehicle settings available.

The person skilled in the art realizes that the present disclosure by no means is limited to the preferred embodiments described above. On the contrary, many modifications and variations are possible within the scope of the appended claims. It should furthermore be noted that the drawings have not necessarily been drawn to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a vehicle settings adapting system (1) for assisting an occupant (3) of a vehicle (2) in tailoring vehicle settings of said vehicle (2) to suit said occupant (3), said method comprising:
***deriving*** (1003) input parameters (41) characterizing said vehicle occupant (3), said input parameters (41) comprising data indicative of lifestyle characteristics of said vehicle occupant (3);
***classifying*** (1004) said vehicle occupant (3) into one matching profile (511) representing a personality type considered to correspond to said vehicle occupant (3), selected from a plurality of predefined potential vehicle occupant profiles (51), based on said input parameters (41); and
***determining*** (1005) vehicle settings (521) specifically associated with said matching profile (511).

2. The method according to claim 1, further comprising:
***implementing*** (1006) said vehicle settings (521) specifically associated with the matching profile (511).

3. The method according to claim 1 or 2, further comprising:
***defining*** (1001) a plurality of potential vehicle occupant profiles (51); and
***associating*** (1002) a respective set of vehicle settings (52) to each of said potential vehicle occupant profiles (51).

4. The method according to any one of claims 1-3, wherein said *determining* (1005) comprises determining vehicle settings (521) specifically associated with the matching profile (511), wherein said vehicle settings (521) comprise one or a plurality of:
physical settings adapted to affect physical characteristics of said vehicle (2);
digital settings adapted to affect digital characteristics of said vehicle (2);
sound settings adapted to affect sound characteristics of said vehicle (2); and/or
light settings adapted to affect light characteristics of said vehicle (2).

5. The method according to any one claims 1-4, wherein said *deriving* (1003) input parameters (41) characterizing the vehicle occupant (3), comprises:
deriving, by means of a user interaction application (42), said input parameters (41) by prompting the vehicle occupant (3) to provide response (x, x₂, x₂₂) to at least a first preference question, said input parameters (41) being based on said response (x, x₂, x₂₂).

6. The method according to any one of claims 1-5, wherein said *deriving* (1003) input parameters (41) characterizing the vehicle occupant (3), comprises:
deriving said input parameters (41) from a personal account (43) associated with said vehicle occupant (3), said input parameters (41) being based on content of said personal account (43).

7. A **vehicle settings adapting system** (1) adapted for assisting an occupant (3) of a vehicle (2) in tailoring vehicle settings of said vehicle (2) to suit said occupant (3), said vehicle setting adapting system (1) comprising:
a **deriving unit** (101) adapted for *deriving* (1003) input parameters (41) characterizing said vehicle occupant (3), said input parameters (41) comprising data indicative of lifestyle characteristics of said vehicle occupant (3);
a **classifying unit** (102) adapted for *classifying* (1004) said vehicle occupant (3) into one matching profile (511) representing a personality type considered to correspond to said vehicle occupant (3), selected from a plurality of predefined potential vehicle occupant profiles (51), based on said input parameters (41); and
a **determining unit** (103) adapted for *determining* (1005) vehicle settings (521) specifically associated with said matching profile (511).

8. The vehicle settings adapting system (1) according to claim 7, further comprising:
an **implementing unit** (104) adapted for *implementing* (1006) said vehicle settings (521) specifically associated with the matching profile (511).

9. The vehicle settings adapting system (1) according to claim 7 or 8, further comprising:
a **defining unit** (105) adapted for *defining* (1001) a plurality of potential vehicle occupant profiles (51); and
an **associating unit** (106) adapted for *associating* (1002) a respective set of vehicle settings (52) to each of said potential vehicle occupant profiles (51).

10. The vehicle settings adapting system (1) according to any one of claims 7-9,
wherein said determining unit (103) is adapted for determining vehicle settings (521) specifically associated with the matching profile (511), wherein said vehicle settings (521) comprise one or a plurality of:
physical settings adapted to affect physical characteristics of said vehicle (2);
digital settings adapted to affect digital characteristics of said vehicle (2);
sound settings adapted to affect sound characteristics of said vehicle (2); and/or
light settings adapted to affect light characteristics of said vehicle (2).

11. The vehicle settings adapting system (1) according to any one of claims 7-10,
wherein said deriving unit (101) further is adapted for:
deriving, by means of a user interaction application (42), said input parameters (41) by prompting the vehicle occupant (3) to provide response (x, x₂, x₂₂) to at least a first preference question, said input parameters (41) being based on said response (x, x₂, x₂₂).

12. The vehicle settings adapting system (1) according to any one of claims 7-11,
wherein said deriving unit (1003) further is adapted for:
deriving said input parameters (41) from a personal account (43) associated with said vehicle occupant (3), said input parameters (41) being based on content of said personal account (43).

13. A vehicle (2) comprising at least a portion of a vehicle settings adapting system (1) according to any of claims 7-12.

14. An input device (4) comprising at least a portion of a vehicle settings adapting system (1) according to any of claims 7-12, said input device (4) being adapted to enable a vehicle occupant (3), or one associated with said vehicle occupant (3), to provide input to said vehicle settings adapting system (1).

15. Computer program product comprising a computer program containing computer program code means arranged to cause a computer or a processor to execute the steps of a method according to any of claims 1-6, stored on a computer-readable medium or a carrier wave.

## Patentansprüche

1. Von einem Fahrzeugeinstellungsanpassungssystem (1) durchgeführtes Verfahren zum Unterstützen eines Insassen (3) eines Fahrzeugs (2) beim Maßschneidern von Fahrzeugeinstellungen des Fahrzeugs (2) derart, dass sie zum Insassen (3) passen, wobei das Verfahren Folgendes umfasst:
***Ableiten*** (1003) von Eingangsparametern (41), die den Fahrzeuginsassen (3) charakterisieren, wobei die Eingangsparameter (41) Daten umfassen, die Lebensstilcharakteristika des Fahrzeuginsassen (3) anzeigen;
***Klassifizieren*** (1004) des Fahrzeuginsassen (3) auf Basis der Eingangsparameter (41) in ein passendes Profil (511), das einen Persönlichkeitstyp repräsentiert, von dem angenommen wird, dass er dem Fahrzeuginsassen (3) entspricht, das aus einer Vielzahl von vordefinierten potenziellen Fahrzeuginsassenprofilen (51) ausgewählt wird; und
***Bestimmen*** (1005) von Fahrzeugeinstellungen (521), die speziell mit dem passenden Profil (511) verknüpft sind.

2. Verfahren nach Anspruch 1, das ferner Folgendes umfasst:
***Implementieren*** (1006) der Fahrzeugeinstellungen (521), die speziell mit dem passenden Profil (511) verknüpft sind.

3. Verfahren nach Anspruch 1 oder 2, das ferner Folgendes umfasst:
***Definieren*** (1001) einer Vielzahl von potenziellen Fahrzeuginsassenprofilen (51) und
***Verknüpfen*** (1002) eines jeweiligen Satzes von Fahrzeugeinstellungen (52) mit jedem der potenziellen Fahrzeuginsassenprofile (51).

4. Verfahren nach einem der Ansprüche 1-3, wobei das *Bestimmen* (1005) das Bestimmen von Fahrzeugeinstellungen (521), die speziell mit dem passenden Profil (511) verknüpft sind, umfasst, wobei die Fahrzeugeinstellungen (521) eines oder eine Vielzahl von Folgendem umfassen:
physische Einstellungen, die angepasst sind, physische Charakteristika des Fahrzeugs (2) zu beeinflussen;
digitale Einstellungen, die angepasst sind, digitale Charakteristika des Fahrzeugs (2) zu beeinflussen;
Klangeinstellungen, die angepasst sind, Klangcharakteristika des Fahrzeugs (2) zu beeinflussen; und/oder
Beleuchtungseinstellungen, die angepasst sind, Beleuchtungscharakteristika des Fahrzeugs (2) zu beeinflussen.

5. Verfahren nach einem der Ansprüche 1-4, wobei das *Ableiten* (1003) von Eingangsparametern (41), die den Fahrzeuginsassen (3) charakterisieren, Folgendes umfasst:
Ableiten der Eingangsparameter (41) mittels einer Benutzerinteraktionsanwendung (42) durch Auffordern des Fahrzeuginsassen (3), eine Antwort (x, x₂, x₂₂) auf mindestens eine erste Präferenzfrage bereitzustellen,
wobei die Eingangsparameter (41) auf der Antwort (x, x₂, x₂₂) basieren.

6. Verfahren nach einem der Ansprüche 1-5, wobei das *Ableiten* (1003) von Eingangsparametern (41), die den Fahrzeuginsassen (3) charakterisieren, Folgendes umfasst:
Ableiten der Eingangsparameter (41) von einem persönlichen Konto (43), das mit dem Fahrzeuginsassen (3) verknüpft ist, wobei die Eingangsparameter (41) auf dem Inhalt des persönlichen Kontos (43) basieren.

7. **Fahrzeugeinstellungsanpassungssystem** (1), das zum Unterstützen eines Insassen (3) eines Fahrzeugs (2) beim Maßschneidern von Fahrzeugeinstellungen des Fahrzeugs (2) derart, dass sie zum Insassen (3) passen, angepasst ist, wobei das Fahrzeugeinstellungsanpassungssystem (1) Folgendes umfasst:
eine **Ableitungseinheit** (101), die zum *Ableiten* (1003) von Eingangsparametern (41), die den Fahrzeuginsassen (3) charakterisieren, angepasst ist, wobei die Eingangsparameter (41) Daten umfassen, die Lebensstilcharakteristika des Fahrzeuginsassen (3) anzeigen;
eine **Klassifizierungseinheit** (102), die zum *Klassifizieren* (1004) des Fahrzeuginsassen (3) auf Basis der Eingangsparameter (41) in ein passendes Profil (511), das einen Persönlichkeitstyp repräsentiert, von dem angenommen wird, dass er dem Fahrzeuginsassen (3) entspricht, das aus einer Vielzahl von vordefinierten potenziellen Fahrzeuginsassenprofilen (51) ausgewählt wird, angepasst ist; und
eine **Bestimmungseinheit** (103), die zum *Bestimmen* (1005) von Fahrzeugeinstellungen (521), die speziell mit dem passenden Profil (511) verknüpft sind, angepasst ist.

8. Fahrzeugeinstellungsanpassungssystem (1) nach Anspruch 7, das ferner Folgendes umfasst:
eine **Implementierungseinheit** (104), die zum *Implementieren* (1006) der Fahrzeugeinstellungen (521), die speziell mit dem passenden Profil (511) verknüpft sind, angepasst ist.

9. Fahrzeugeinstellungsanpassungssystem (1) nach Anspruch 7 oder 8, das ferner Folgendes umfasst:
eine **Definitionseinheit** (105), die zum *Definieren* (1001) einer Vielzahl von potenziellen Fahrzeuginsassenprofilen (51) angepasst ist, und
eine **Verknüpfungseinheit** (106), die zum *Verknüpfen* (1002) eines jeweiligen Satzes von Fahrzeugeinstellungen (52) mit jedem der potenziellen Fahrzeuginsassenprofile (51) angepasst ist.

10. Fahrzeugeinstellungsanpassungssystem (1) nach einem der Ansprüche 7-9, wobei die Bestimmungseinheit (103) zum Bestimmen von Fahrzeugeinstellungen (521), die speziell mit dem passenden Profil (511) verknüpft sind, angepasst ist, wobei die Fahrzeugeinstellungen (521) eines oder eine Vielzahl von Folgendem umfassen:
physische Einstellungen, die angepasst sind, physische Charakteristika des Fahrzeugs (2) zu beeinflussen;
digitale Einstellungen, die angepasst sind, digitale Charakteristika des Fahrzeugs (2) zu beeinflussen;
Klangeinstellungen, die angepasst sind, Klangcharakteristika des Fahrzeugs (2) zu beeinflussen; und/oder
Beleuchtungseinstellungen, die angepasst sind, Beleuchtungscharakteristika des Fahrzeugs (2) zu beeinflussen.

11. Fahrzeugeinstellungsanpassungssystem (1) nach einem der Ansprüche 7-10, wobei die Ableitungseinheit (101) ferner zu Folgendem angepasst ist:
Ableiten der Eingangsparameter (41) mittels einer Benutzerinteraktionsanwendung (42) durch Auffordern des Fahrzeuginsassen (3), eine Antwort (x, x₂, x₂₂) auf mindestens eine erste Präferenzfrage bereitzustellen, wobei die Eingangsparameter (41) auf der Antwort (x, x₂, x₂₂) basieren.

12. Fahrzeugeinstellungsanpassungssystem (1) nach einem der Ansprüche 7-11, wobei die Ableitungseinheit (1003) ferner zu Folgendem angepasst ist:
Ableiten der Eingangsparameter (41) von einem persönlichen Konto (43), das mit dem Fahrzeuginsassen (3) verknüpft ist, wobei die Eingangsparameter (41) auf dem Inhalt des persönlichen Kontos (43) basieren.

13. Fahrzeug (2), das mindestens einen Abschnitt eines Fahrzeugeinstellungsanpassungssystems (1) nach einem der Ansprüche 7-12 umfasst.

14. Eingabevorrichtung (4), die mindestens einen Abschnitt eines Fahrzeugeinstellungsanpassungssystems (1) nach einem der Ansprüche 7-12 umfasst, wobei die Eingabevorrichtung (4) angepasst ist, es einem Fahrzeuginsassen (3) oder jemandem, der mit dem Fahrzeuginsassen (3) verknüpft ist, zu ermöglichen, dem Fahrzeugeinstellungsanpassungssystem (1) eine Eingabe bereitzustellen.

15. Computerprogrammprodukt, das ein Computerprogramm umfasst, das Computerprogrammcodemittel enthält, die angeordnet sind, einen Computer oder einen Prozessor zu veranlassen, die Schritte eines Verfahrens nach einem der Ansprüche 1-6 auszuführen, und die auf einem computerlesbaren Medium oder einer Trägerwelle gespeichert sind.

## Revendications

1. Procédé réalisé par un système (1) d'adaptation de réglages de véhicule pour aider un occupant (3) d'un véhicule (2) à personnaliser des réglages de véhicule dudit véhicule (2) pour convenir audit occupant (3), ledit procédé comportant les étapes consistant à :
élaborer (1003) des paramètres (41) d'entrée caractérisant ledit occupant (3) de véhicule, lesdits paramètres (41) d'entrée comportant des données indicatives de caractéristiques de mode de vie dudit occupant (3) de véhicule ;
classifier (1004) ledit occupant (3) de véhicule dans un profil concordant (511) représentant un type de personnalité considéré comme correspondant audit occupant (3) de véhicule, sélectionné parmi une pluralité de profils prédéfinis (51) d'occupants potentiels du véhicule, d'après lesdits paramètres (41) d'entrée ; et
déterminer (1005) des réglages (521) de véhicule associés spécifiquement audit profil concordant (511).

2. Procédé selon la revendication 1, comportant en outre l'étape consistant à :
mettre en œuvre (1006) lesdits réglages (521) de véhicule associés spécifiquement au profil concordant (511).

3. Procédé selon la revendication 1 ou 2, comportant en outre les étapes consistant à :
définir (1001) une pluralité de profils (51) d'occupants potentiels du véhicule ; et
associer (1002) un ensemble respectif de réglages (52) de véhicule à chacun desdits profils (51) d'occupants potentiels du véhicule.

4. Procédé selon l'une quelconque des revendications 1 à 3, ladite détermination (1005) comportant la détermination de réglages (521) de véhicule associés spécifiquement au profil concordant (511), lesdits réglages (521) de véhicule comportant un ou plusieurs éléments parmi :
des réglages physiques prévus pour affecter des caractéristiques physiques dudit véhicule (2) ;
des réglages numériques prévus pour affecter des caractéristiques numériques dudit véhicule (2) ;
des réglages sonores prévus pour affecter des caractéristiques sonores dudit véhicule (2) ; et/ou des réglages lumineux prévus pour affecter des caractéristiques lumineuses dudit véhicule (2).

5. Procédé selon l'une quelconque des revendications 1 à 4, ladite élaboration (1003) de paramètres (41) d'entrée qui caractérisent l'occupant (3) de véhicule comportant :
l'élaboration, au moyen d'une application (42) d'interaction d'utilisateur, desdits paramètres (41) d'entrée en invitant l'occupant (3) de véhicule à apporter une réponse (x, x₂, x₂₂) à au moins une première question de préférence, lesdits paramètres (41) d'entrée étant basés sur ladite réponse (x, x₂, X₂₂).

6. Procédé selon l'une quelconque des revendications 1 à 5, ladite élaboration (1003) de paramètres (41) d'entrée qui caractérisent l'occupant (3) de véhicule comportant :
l'élaboration desdits paramètres (41) d'entrée à partir d'un compte personnel (43) associé audit occupant (3) de véhicule, lesdits paramètres (41) d'entrée étant basés sur un contenu dudit compte personnel (43).

7. Système (1) d'adaptation de réglages de véhicule, prévu pour aider un occupant (3) d'un véhicule (2) à personnaliser des réglages de véhicule dudit véhicule (2) pour convenir audit occupant (3), ledit système (1) d'adaptation de réglages de véhicule comportant :
une unité (101) d'élaboration prévue pour élaborer (1003) des paramètres (41) d'entrée caractérisant ledit occupant (3) de véhicule, lesdits paramètres (41) d'entrée comportant des données indicatives de caractéristiques de mode de vie dudit occupant (3) de véhicule ;
une unité (102) de classification prévue pour classifier (1004) ledit occupant (3) de véhicule dans un profil concordant (511) représentant un type de personnalité considéré comme correspondant audit occupant (3) de véhicule, sélectionné parmi une pluralité de profils prédéfinis (51) d'occupants potentiels du véhicule, d'après lesdits paramètres (41) d'entrée ; et
une unité (103) de détermination prévue pour déterminer (1005) des réglages (521) de véhicule associés spécifiquement audit profil concordant (511).

8. Système (1) d'adaptation de réglages de véhicule selon la revendication 7, comportant en outre :
une unité (104) de mise en œuvre prévue pour mettre en œuvre (1006) lesdits réglages (521) de véhicule associés spécifiquement au profil concordant (511).

9. Système (1) d'adaptation de réglages de véhicule selon la revendication 7 ou 8, comportant en outre :
une unité (105) de définition prévue pour définir (1001) une pluralité de profils (51) d'occupants potentiels du véhicule ; et
une unité (106) d'association prévue pour associer (1002) un ensemble respectif de réglages (52) de véhicule à chacun desdits profils (51) d'occupants potentiels du véhicule.

10. Système (1) d'adaptation de réglages de véhicule selon l'une quelconque des revendications 7 à 9, ladite unité (103) de détermination étant prévue pour déterminer des réglages (521) de véhicule associés spécifiquement au profil concordant (511), lesdits réglages (521) de véhicule comportant un ou plusieurs éléments parmi :
des réglages physiques prévus pour affecter des caractéristiques physiques dudit véhicule (2) ;
des réglages numériques prévus pour affecter des caractéristiques numériques dudit véhicule (2) ;
des réglages sonores prévus pour affecter des caractéristiques sonores dudit véhicule (2) ; et/ou des réglages lumineux prévus pour affecter des caractéristiques lumineuses dudit véhicule (2).

11. Système (1) d'adaptation de réglages de véhicule selon l'une quelconque des revendications 7 à 10, ladite unité (101) d'élaboration étant en outre prévue pour :
élaborer, au moyen d'une application (42) d'interaction d'utilisateur, lesdits paramètres (41) d'entrée en invitant l'occupant (3) de véhicule à apporter une réponse (x, x₂, x₂₂) à au moins une première question de préférence, lesdits paramètres (41) d'entrée étant basés sur ladite réponse (x, x₂, x₂₂) .

12. Système (1) d'adaptation de réglages de véhicule selon l'une quelconque des revendications 7 à 11, ladite unité d'élaboration (1003) étant en outre prévue pour :
élaborer lesdits paramètres (41) d'entrée à partir d'un compte personnel (43) associé audit occupant (3) de véhicule, lesdits paramètres (41) d'entrée étant basés sur un contenu dudit compte personnel (43).

13. Véhicule (2) comportant au moins une partie d'un système (1) d'adaptation de réglages de véhicule selon l'une quelconque des revendications 7 à 12.

14. Dispositif (4) d'entrée comportant au moins une partie d'un système (1) d'adaptation de réglages de véhicule selon l'une quelconque des revendications 7 à 12, ledit dispositif (4) d'entrée étant prévu pour permettre à un occupant (3) de véhicule, ou à une personne associée audit occupant (3) de véhicule, de fournir une entrée audit système (1) d'adaptation de réglages de véhicule.

15. Produit de programme d'ordinateur comportant un programme d'ordinateur contenant des moyens de code de programme d'ordinateur disposés pour amener un ordinateur ou un processeur à exécuter les étapes d'un procédé selon l'une quelconque des revendications 1 à 6, stocké sur un support lisible par ordinateur ou une onde porteuse.
